(19)

Europäisches Patentamt
European Patent Office
Office européen des brevets

(11) **EP 2 554 052 A1**

(12) **EUROPEAN PATENT APPLICATION**

(43) Date of publication:
**06.02.2013 Bulletin 2013/06**

(21) Application number: **12190950.1**

(22) Date of filing: **25.08.2010**

(51) Int Cl.:
*A23D 7/00* (2006.01)     *A23D 7/005* (2006.01)
*A23L 1/10* (2006.01)     *A23L 1/172* (2006.01)
*A23L 1/304* (2006.01)     *A23L 3/358* (2006.01)

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.09.2009 EP 09170155**

(62) Document number(s) of the earlier application(s) in accordance with Art. 76 EPC:
**10744958.9 / 2 477 504**

(71) Applicants:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO SE SI SK SM TR**
• **Unilever PLC**
**Blackfriars**
**London**
**Greater London EC4Y 0DY (GB)**
Designated Contracting States:
**CY GB IE MT**

(72) Inventors:
• **Duchateau, Gustaaf Servaas Marie Joseph Emile**
**3133 AT Vlaardingen (NL)**
• **Flöter, Eckhard**
**14195 Berlin (DE)**
• **Jacobs, Renate Gemma Jacobine Maria**
**3133 AT Vlaardingen (NL)**
• **Zimerfeld-Cukier, Karina**
**CEP 13271-450 Valinhos - SP (BR)**

(74) Representative: **Wurfbain, Gilles L.**
**Unilever N.V.**
**Unilever Patent Group**
**Olivier van Noortlaan 120**
**3133 AT Vlaardingen (NL)**

Remarks:
This application was filed on 01-11-2012 as a divisional application to the application mentioned under INID code 62.

(54) **Edible water in oil emulsion**

(57)     The invention relates to an edible water in oil emulsion spread comprising
- 20 to 80 wt% of a fat phase,
- a dispersed water phase,
- poly unsaturated fatty acid (PUFA),
- trace mineral, and
- an evenly dispersed edible seed mixture,
wherein the amount of seed mixture is 0.1 to 20 wt%, the seed mixture comprises two or more different edible seed and/or seed fragments, 60 to 100 % (w/w) of the seed mixture is bigger than 0.5 mm and 50 to 100 % (w/w) is smaller than 4 mm; and
wherein at least part of the trace mineral is present in the seed mixture.

EP 2 554 052 A1

**Description**

**Field of the invention**

The invention relates to an edible water in oil emulsion spread comprising poly unsaturated fatty acids and trace minerals.

**Background of the invention**

Edible water in oil emulsion spreads like e.g. margarine and low fat spreads are well known food products that comprise a continuous fat phase and a dispersed aqueous phase. The fat phase comprises liquid oil and structuring fat (also known as hard stock). The liquid oil is liquid at room temperature. The structuring fat is solid at room temperature and serves to structure the fat phase and helps to stabilize the emulsion.

The liquid oil fraction typically comprises liquid unmodified vegetable oil such as soybean oil, sunflower oil, low erucic rapeseed oil (Canola), corn oil and blends of vegetable oils. Also marine type oils such as fish oil and algae oil may be used.

Spreads comprising poly unsaturated fatty acids (PUFA) are preferred by some consumers because of the good nutritional profile. However, PUFA are more susceptible to fat oxidation due to their high degree of unsaturation. Spreads comprising PUFA may therefore spoil more easily during storage.

Dietary or essential minerals are chemical elements required by living organisms, other than the four elements carbon, hydrogen, nitrogen, and oxygen which are ubiquitous in organic molecules. They can be either bulk minerals (required in relatively large amounts) or trace minerals (required only in minute amounts). The most important trace mineral elements are chromium, cobalt, copper, iron, manganese, molybdenum, selenium, and zinc.

These can be naturally occurring in food or added in elemental or mineral form such as calcium carbonate or sodium chloride. Sometimes minerals are taken as supplements, e.g. tablets or capsules. Appropriate intake levels of each dietary mineral must be sustained to maintain physical health.

Spreads may provide a suitable vehicle for incorporation of minerals for consumers who regularly use spreads as part of their diet.

Unfortunately many of these minerals are pro-oxidative, i.e. compounds that promote oxidation. In particular the oxidation of fats, especially (poly) unsaturated fatty acids, also known as rancidification, is detrimental in food products as it gives an unpleasant flavor and thus results in a food product with suboptimal organoleptic properties.

One option is to encapsulate the pro-oxidative compound. A drawback of the encapsulation is that a suitable encapsulate should be found that works well in the food product. In addition, the encapsulate needs to release the mineral within a certain time after consumption such that the mineral is available to the human body (i.e. good bioavailability).

US 2008/0254193 discloses edible water-in-oil emulsions comprising a source of mineral wherein the mineral is in-homogenously distributed over the aqueous phase.

Optimal bioavailability of encapsulates requires fast and complete release in the body, however this release property is in conflict with the requirement of the encapsulate to remain stable over (extended) shelf life. Typically, bioavailable encapsulates release the encapsulated compounds to smaller or greater extent already in the product. As a result the shelf-life of such products becomes too short to be commercially interesting.

Cereal grains, pseudo-cereals and oleaginous seeds are known to comprise micronutrients like trace minerals and vitamins. However, the bioavailability of the micronutrients in this type of food format is not always optimal. Part if not most of the micronutrients like e.g. iron cannot be readily absorbed by the human body and are excreted via the stool. For example it is known that iron present in certain grains is not readily absorbed by the human body. Therefore, cereal grains, pseudo-cereals and oleaginous seeds may not be the most efficient source of micronutrients in the human diet.

It is an object of the present invention to provide a food product comprising PUFA and trace minerals having good organoleptic properties. Another object of the invention is to provide a food product that is storage stable at chilled and ambient temperature. A further object of the invention is to provide a food product comprising trace minerals wherein at least part of the minerals have a good bioavailability.

**Summary of the invention**

One or more of the above objects is attained by an edible water in oil emulsion spread comprising

-   20 to 80 wt% of a fat phase,
-   a dispersed water phase,

- poly unsaturated fatty acid (PUFA),
- trace mineral, and

an evenly dispersed edible seed mixture.

**Detailed description of the invention**

Wt% is calculated on total weight of product unless otherwise specified. For the purpose of the invention ambient temperature is defined as a temperature between 15 and 25 degrees Celsius. The terms 'oil' and 'fat' are used interchangeably unless specified otherwise.

The edible water in oil emulsion spread according to the invention comprises an evenly dispersed edible seed mixture in an amount of 0.1 to 20 wt% and at least part of the trace mineral is present in the seed mixture. It was surprisingly found that such a spread has good organoleptic properties even upon storage at chilled or ambient temperatures.

Preferably the amount of seed mixture is 0.5 to 15 wt%, more preferably 1 to 10 wt%, even more preferably 2 to 8 wt%, still more preferably 3 to 7 wt% and most preferably 4 to 6 wt%.

The seed mixture is evenly dispersed in the edible water in oil emulsion spread. For the purpose of this invention this is to be understood as follows. Visually the seed mixture is evenly distributed over the spread and the average amount of seed mixture per 20 gram sample of spread has a variance of plus or minus 50%, preferably plus or minus 35%, more preferably plus or minus 20% and most preferably zero.

Seed mixture

For the purpose of this invention edible seed is defined as being cereal grains, pseudo-cereals and oleaginous seeds. The edible seed mixture according to the invention does not include nuts and beans.

The seed mixture comprises two or more different edible seed and/or seed fragments. A suitable edible seed comprises all parts that are generally eaten and accepted as being part of the edible part of the seed. It excludes for example the husk of a seed being the inedible outer layer that is removed before human consumption. The remaining part of a seed after the non-edible part has been removed is considered to be the edible seed. For example a dehulled sunflower seed results in the sunflower kernel being the edible seed. The edible seed mixture may also comprise edible seed fragments. A fragment is considered to be any part of the edible seed not being the whole and intact edible seed. For example a whole grain kernel consists of a bran, endosperm and germ. This is considered to be the edible seed. Any part thereof is considered to be a seed fragment like e.g. the bran, the germ or the endosperm or parts of any of these like for example a part of the endosperm.

Two or more different seed and/or seed fragments is to be understood as comprising seed and/or seed fragments from two or more different origin. For example a seed mixture of sunflower kernels and wheat consists of two different edible seeds. Fragments of the same kind of edible seed are considered to be of one and the same origin. For example a mixture of wheat germ, wheat bran and sunflower kernels is considered to consist of two different edible seed and seed fragments as wheat germ and wheat bran have the same origin being wheat.

Preferably the seed mixture comprises three, more preferably four and even more preferably five different edible seed and/or seed fragments.

Suitable cereal grains include wheat, barley, oat, rye, rice, corn (maize), sorghum, millets, triticale, fonio, palmer's grass, spelt and teff. Suitable pseudo-cereals include linseed (flax seed), breadnut, buckwheat, cattail, chia, grain amaranth, kañiwa, pitseed goosefoot, quinoa and wattleseed (acacia seed). Suitable oleagenous seeds include sunflower seed, sesame seed and pumpkin seed.

Preferably the edible seed and/or seed fragments are selected from the group consisting of wheat, barley, oat, rye, linseed (flax seed), sunflower seed, sesame seed and fragments thereof.

Seed mixture particle size

The particle size of the seed mixture is such that 60 to 100 % (w/w) of the seed mixture is bigger than 0.5 mm and 50 to 100 % (w/w) is smaller than 4 mm. The particle size of the seed mixture is measured by sieving the mixture through a sieve with a specific mesh size and is a commonly known method to measure particle size distribution. The seed mixture is placed on top of the sieve, thoroughly shaken and either the part that remains on top of the sieve or fell through the sieve is weighted. For example the part of the seed mixture that remains on top of a sieve having openings of 0.5 by 0.5 mm (being a square opening) after shaking is the part that is bigger than 0.5 mm. Likewise the part of the seed mixture that fell through a sieve having openings of 4 by 4 mm (being a square opening) after shaking is the part that is smaller than 4 mm.

This way of size measurement measures the two smallest dimensions of a particle and reflects for non round particles the 2 smallest dimensions. For example, a particle measuring 1 by 1 by 6 mm is bigger than 0.5 mm and smaller than 4 mm. A particle measuring 0.3 by 0.4 by 2 mm is smaller than 0.5 mm and smaller than 4 mm. A particle measuring 1 by 5 by 6 mm will be bigger than 0.5 mm and bigger than 4 mm. A more or less round particle with a diameter of 3 mm will be bigger than 0.5 mm and smaller than 4 mm.

Preferably 70 to 95 % (w/w) more preferably 75 to 90 % (w/w) and even more preferably 80 to 85 % (w/w) of the seed mixture is bigger than 0.5 mm. The latter indicates the lower value of the size distribution.

Preferably the lower value of the size distribution is such that the seed mixture is bigger than 0.6 mm, more preferable bigger than 0.7 mm, even more preferable bigger than 0.8 mm and most preferable bigger 0.9 mm. This is to be understood as that at least part of the seed mixture is bigger than the defined value.

Preferably 50 to 100 % (w/w), preferably 60 to 95 % (w/w), more preferably 70 to 90 % (w/w) and even more preferably 80 to 85 % (w/w) of the seed mixture is smaller than 4 mm. The latter indicates the upper value of the size distribution.

Preferably the upper value of the size distribution is such that the seed mixture is smaller than 3.5 mm, preferably smaller than 3 mm, more preferably smaller than 2.5 mm and most preferably smaller than 2 mm. This is to be understood as that at least part of the seed mixture is smaller than the defined value.

Trace mineral

The spread according to the invention comprises trace mineral and at least part of the trace mineral is present in the seed mixture. It will be appreciated that the distribution of trace mineral as part of the edible seed mixture will depend on the composition of the mixture. For example certain seed and/or seed fragments may comprise most or all of the trace mineral or of a specific trace mineral like e.g. iron present in the edible seed mixture. If the trace mineral is a mixture of different minerals individual minerals may be distributed differently within the seed mixture depending on the composition (origin) of the seed mixture.

Suitable trace minerals are chromium, cobalt, copper, iron, manganese, molybdenum, selenium, zinc and combinations thereof. Preferably the trace mineral is selected from the group consisting of copper, iron, zinc and combinations thereof. More preferred trace minerals are iron and zinc, with iron being the most preferred.

Preferably the total amount of trace mineral per 100 gram spread is 0.01 to 100 mg, more preferably 0.1 to 80 mg, even more preferably 0.2 to 60 mg, still more preferably 0.5 to 50 mg, still even more preferably 0.6 mg to 5 mg and most preferably 0.7 mg to 2.5 mg.

For the purpose of the invention the amounts are of the trace mineral per se and not the salt or complex thereof. That is, the amounts are calculated on the amount of ion or element. For example, should zinc oxide be present in the spread, 10 mg zinc oxide corresponds with an amount of 8 mg zinc.

The amount of trace mineral can suitably be determined using spectroscopic measurement as generally known to the skilled person. The emission of the individual element is measured at specific wavelengths and concentrations are quantified from standard solutions as generally know. For example, total iron may be determined by inductively coupled plasma atomic emission spectroscopy using standard operating procedures as known to the skilled person. Briefly, samples are digested in 5 mL 65% nitric acid and 0.5 mL 30% hydrogen peroxide in closed vessel in a microwave oven at high temperature and high pressure (110 bar). After digestion the volume is adjusted to 50 mL using de-mineralized water and sprayed in the inductively coupled plasma of the plasma atomic emission spectrometer (Perkin - Elmer).

It was surprisingly found that by including at least part of the trace mineral in the spread via the seed mixture the oxidation of the PUFA usually catalyzed by such minerals like for example iron, copper and zinc may, at least to a certain extend, be retarded or prevented. It may also be that the bio availability of one or more of these minerals is still acceptable. This can easily be measured for example as below.

For mineral bioavailability, and in particular iron bioavailability, the amount of mineral, related to the total amount present in (one serving of) the product, which is present in the gastro-intestinal tract in its free, dissolved ionic form is the determining factor. Only compounds which are present in the gastro-intestinal tract in a molecularly dispersed form can be taken up by the cells lining the intestinal tract. This approach is common in this field and the initial concept was presented by Miller (Miller, D.D., Schricker, B.R., Rasmussen, R.R. et al.; American Journal of Clinical Nutrition; 1981, Vol. 34, no.10, p. 2248-2256.

A suitable approach to determine this fraction of total mineral amount available for uptake, is to subject the food product to a simulated digestion step, including the gastric and small intestinal phase. Simulated digestion steps take care of the specific shear, pH and enzymatic processes involved in the stomach, respectively small intestine digestion. After the small intestinal step a further separation is made between the ionic species which are liberated from the food product during the simulated gastric and small intestinal digestion, into the free ionic species and the ionic species still bound to other food compounds, as such or as result of the digestion process (e.g. protein and protein fractions). This separation is achieved by using a suitable dialysis membrane with a specifically selected molecular weight cut-off limit, e.g. 8000 Dalton and lower. The amount of ionic iron now obtained in the dialysate ("dialyzable iron") is related to the total amount as present in the food and expressed as a percentage value.

It is generally accepted that the amount of mineral in its free, dissolved ionic form is the determining factor for bio-availability. However, a further refinement in the determination of bioavailability may for example be made by testing the response of incubated intestinal cells to the dialyzable iron fraction. A suitable cell model is obtained from a human colonic adenocarcinoma (Caco-2) cell line. These cells can be handled in-vitro and respond in a similar manner to iron available for uptake as human intestinal cells. Caco-2 cells incubated for a suitable time with the ionic iron obtained after the dialysis step, respond with the formation of their normal iron-storage protein (ferritin). The amount of ferritin formed in the Caco2 cells is determined using commercially available kit assays, based on immune specific binding (enzyme-linked immunosorbent assay, ELISA). The ferritin response as determined with the ELISA assay is standardized for the total protein content of the cell sample taken into the ferritin analysis (i.e. ferritin response is expressed as ng of ferritin/mg total protein).

This combined approach of in-vitro digestion, determining the dialyzable iron fraction and finally testing the cellular reponse to ionic iron available for uptake via the ferritin formation is common practice in the field an dused to test and rank food formulations for iron bioavailability. (See for example Glahn, R.P., Lee, O.A., Yeung, A. et al.; Journal of Nutrition; 1998, Vol. 128, no.9, p. 1555-1561. and Fairweather-Tait, S.J., Lynch, S., Hotz, C. et al.; International Journal for Vitamin and Nutrition Research; 2007, Vol. 75, no.6, p. 371-374).

At least part of the total amount of trace mineral in the spread is present in the seed mixture. That is, in addition to the amount of trace mineral present in the seed mix the spread may comprise additional amounts of the same and/or different trace minerals to for example further enhance the nutritional profile. Suitable sources for the trace minerals not part of the seed mixture are food grade mineral sources as generally known to the skilled person. For example, suitable iron sources are ferrous carbonate, ferrous citrate, ferrous ammonium citrate, ferrous gluconate, ferrous fumarate, ferric sodium diphosphate, ferrous lactate, ferrous sulphate, ferric diphosphate, ferric pyrophosphate, ferric saccharate, ferrous EDTA, elemental iron. Suitable zinc sources are zinc acetate, zinc chloride, zinc citrate, zinc gluconate, zinc lactate, zinc oxide, zinc carbonate, zinc sulphate.

Certain drawbacks may be associated with the addition of trace elements in addition to the trace minerals present in the seed mix. This depends on the kind of trace mineral and the format in which they are added to the spread (e.g. specific salt or encapsulate). These drawbacks may include limited bio availability, promotion of oxidation of PUFA and/or being expensive.

Therefore, preferably at least 50 %, more preferably at least 70 %, even more preferably at least 80%, still even more preferably at least 90% and most preferably essentially all of the total amount of trace mineral is present in the seed mixture. Preferably the total amount of trace mineral is calculated for the pro-oxidative trace minerals present in the spread, more preferably for the amounts of iron, zinc and copper present in the spread, even more preferably for the amounts of iron and zinc present in the spread and most preferably for the amount of iron present in the spread.

## Emulsion Composition

The emulsion according to the invention comprises 20 to 80 wt% of a fat phase, preferably 25 to 70 wt%, more preferably 30 to 60 wt% and most preferably 35 to 50 wt%.

The fat can be a single fat or a combination of fats. The fat or combination of fats is selected such that the solid fat content is below 8% at 35 degrees Celsius, preferably below 6% at 35 degrees Celsius, more preferably below 4% at 35 degrees Celsius. Even more preferably the solid fat content at 35 degrees Celsius is from 1 to 8% and most preferably from 2 to 6%. The method to determine solid fat content is described in the experimental section.

The fat or fat blend may comprise vegetable or animal fats which may be hydrogenated, interesterified or fractionated. Suitable animal fats may consist of butterfat or tallow. Suitable vegetable fats can for example be selected from the group comprising bean oil, sunflower oil, palm kernel oil, coconut oil, palm oil, rapeseed oil, cotton seed oil, maize oil, or their fractions, or a combination thereof. Interesterified fat blends of these fats or optionally with other fats are also encompassed in the invention.

In addition to the fat phase, the edible seed mixture may also comprise fat and thereby contribute to the total amount of fat present in the emulsion. For example, if the spread has a fat phase of 50 wt% and comprises 10 wt% of a seed mix wherein the seed mix has a fat content of 50%, the total amount of fat present in the spread is 55 wt%.

## PUFA

Emulsions according to the invention comprise poly unsaturated fatty acids (PUFA). Preferred PUFA are omega-3 and omega-6 fatty acids, such as alpha linoleic acid (ALA) and linoleic acid. Preferably the emulsion further comprises long chain PUFA such as DHA and/or EPA. Suitable sources of long chain omega-3 fatty acids are fish oil and algae oil.

Preferably the other fats in the fat phase are mainly of vegetable origin. Preferably the fat phase comprises at least 25 wt% vegetable fat, more preferably at least 50 wt% vegetable fat and most preferably at least 80 wt% vegetable fat. Preferably the fat phase does not include dairy fat or fat of dairy origin to enhance the nutritional profile of the spread.

Preferably the amount of PUFA is 20 to 80 wt%, more preferably 30 to 70 wt%, even more preferably 40 to 60 wt% and still more preferably 50 to 55 wt% calculated on total amount of fat.

In a preferred embodiment edible water in oil emulsion spreads of the invention comprise 2 to 40 wt%, more preferably 5 to 30 wt%, and even more preferably 7 to 20 wt% omega-3 fatty acids on fat.

Preferably at least part, preferably at least 5 %, more preferably at least 10 %, even more preferably at least 20 %, still more preferably at least 40 % and most preferably at least 50 % of the total amount of PUFA is present as part of the edible seed mixture. It will be appreciated that the distribution of the PUFA as part of the edible seed mixture will depend on the composition of the mixture. For example certain seed and/or seed fragments may comprise most or all of the PUFA present in the edible seed mixture.

Suitably at least 0.3 wt% of the fat of the edible emulsion of this invention are DHA and/or EPA fatty acids, more suitably more than 1 wt%, most suitably more than 2 wt%. Suitably the edible emulsion of the present invention comprises 0.5 to 25 wt% of EPA and/or DHA fatty acids on fat level, preferably 1 to 15 wt%, more preferably 2 to 10 wt% and most preferably 3 to 7 wt%.

Preferably the amount of dispersed water phase in the edible water in oil emulsion spread according to the invention is 20 to 80 wt%, preferably 30 to 70 wt%, more preferably 35 to 60 wt% and most preferably 40 to 50 wt%.

Preferably the level of trans fatty acids on total amount of fat phase is below 10%, more preferably below 7%, even more preferably below 4% and most preferably below 2%. This will enhance the nutritional profile of the spread.

Other emulsion properties

In addition, the emulsion according to the invention comprises an emulsifier. The emulsifier is preferably a water-in-oil emulsifier, preferably selected from the group comprising distilled monoglycerides, citric acid esters of monoglycerides, di-acetyl acetic acid esters of monoglycerides, lactic acid esters of monoglyceride, mono-diglycerides, polyglycerol esters of fatty acids, sorbitan esters of fatty acids or lecithin.

The pH of the aqueous phase can be set to the desired value, among others to influence acidic or basic taste impression and to influence microbial stability. Preferably the pH of the aqueous phase in food products according to the invention is from 4.3 to 5.5.

Optionally some protein is added to the emulsion according to the invention. Protein may be added to beneficially influence the taste, flavor and nutritional value of the emulsion and also may be added to increase browning of food stuff when the current composition is used as a medium for shallow frying.

The emulsion according to the invention optionally contains other ingredients such as preservatives, vitamins, taste and flavor components, colorants such as beta-carotene, anti-oxidants.

**Experimental**

Method to determine solid fat content

The solid fat content can be measured by a suitable analytical method such as NMR. The method used is low resolution NMR with Bruker Minispec apparatus. Reference is made to the Bruker minispec application notes 4, 5 and 6.

The percentage of solid fat determined by the low resolution NMR technique is defined as the ratio of the response obtained from the hydrogen nuclei in the solid phase and the response arising from all the hydrogen nuclei in the sample. The product of this ratio and one hundred is termed the low resolution NMR solids percent. No correction is made for variations in the proton density between solid and liquid phase. The NMR solids percent for a sample measured at t °C was given the symbol $N_t$.

Suitable instruments adapted to determine the solids fat content are the Bruker Minispecs p20i ™, pc20 ™, pc120 ™, pc120s ™, NMS120 ™ and MQ20 ™.

Stabilization and tempering procedure was as follows:

- melt fat at 80 °C
- 5 minutes at 60 °C
- 60 minutes at 0 °C
- 30-35 minutes at each chosen measuring temperature.

Sensory panel

Taste or flavor of the emulsion is determined by a sensory panel. Sensory panels consist of trained human assessors that qualify and quantify sensory properties of foods. The responses made by the sensory panels are recorded and may be analyzed by statistical methods e.g. ANOVA, multivariate or univariate data analyses. Within food research, sensory panels are commonly used to qualify and quantify sensory properties, such as taste, odor or smell, flavor, mouthfeel, and other organoleptic properties. The type of sensory panel will depend on the taste of the tasty ingredient and the product format, however these consideration are all within the skills of a skilled person.

Peroxide value

To determine the level of fat oxidation the peroxide value was determined according to USP32 (United States Pharmacopeia) as below..

The Peroxide Value is the number that expresses, in milli-equivalents of active oxygen, the quantity of peroxide contained in 1000 g of the substance. [NOTE-This test must be performed promptly after sampling to avoid oxidation of the test specimen.]

Procedure, place about 5 g of the substance, accurately weighed, in a 250-mL conical flask fitted with a ground-glass stopper. Add 30 mL of a mixture of glacial acetic acid and chloroform (3:2), shake to dissolve, and add 0.5 mL of saturated potassium iodide solution. Shake for exactly 1 minute, and add 30 mL of water. Titrate with 0.01 N sodium thiosulfate, adding the titrant slowly with continuous shaking, until the yellow color is almost discharged. Add 5 mL of starch (Mix 1 g of soluble starch with 10 mg of red mercuric iodide and sufficient cold water to make a thin paste. Add 200 mL of boiling water, and boil for 1 minute with continuous stirring. Cool, and use only the clear solution. [NOTE-Commercially available, stabilized starch indicator solutions may be used.]), and continue the titration, shaking vigorously, until the blue color is discharged. Perform a blank determination under the same conditions. [NOTE-The volume of titrant used in the blank determination must not exceed 0.1 mL.]

Calculate the Peroxide Value by the formula:

$$[1000\ (V_T - V_B)\ N] / W$$

in which $V_T$ and $V_B$ are the volumes, in mL, of 0.01 N sodium thiosulfate consumed in the actual test and in the blank test, respectively; N is the exact normality of the sodium thiosulfate solution; and $W$ is the weight, in g, of the substance taken for the test.

Examples 1 and 2, Comparative examples A and B

Four spreads were made according to Table 1 with amounts of trace minerals as in Table 2. The trace minerals were present in Examples 1 and 2 as part of the seed mixture. The trace minerals were present in Comparatives A and B in the form of the sulfate salt added to the water phase.

The spreads were made by preparing the fat phase and water phase. A premix was made by mixing the fat phase and water phase at 55 degrees Celsius. This was followed by a conventional votator process to make the spread. For example 1 and 2 the seed mixture was post dosed and mixed in by hand.

Part of the spread so made was stored at 10 degrees Celsius and part was stored at 25 degrees Celsius. The level of fat oxidation was assessed by measuring the peroxide value as described above. The results can be found in Tables 3 and 4.

Table 1, Spreads composition

|  | Example 1 | Example 2 | Comparative A | Comparative B |
|---|---|---|---|---|
| FAT PHASE: |  |  |  |  |
| Soybean oil | 57.19 | 48.16 | 57.19 | 48.16 |
| Hardstock# | 9.31 | 7.84 | 9.31 | 7.84 |
| Monoglyceride emulsifier | 0.17 | 0.14 | 0.18 | 0.30 |
| Vitamin A | 0.02 | 0.02 | 0.02 | 0.02 |
|  |  |  |  |  |

(continued)

| WATER PHASE: | | | | |
|---|---|---|---|---|
| Potassium sorbate | 0.10 | 0.08 | 0.10 | 0.08 |
| Citric acid | 0.08 | 0.06 | 0.08 | 0.08 |
| Salt | 1.23 | 1.04 | 1.23 | 1.04 |
| Ferrous sulphate | - | - | 0.002270 | 0.009090 |
| Copper sulphate | - | - | 0.000520 | 0.002090 |
| Water | To balance | To balance | To balance | To balance |
| | | | | |
| SEED MIXTURE | | | | |
| White sesame seed | 5 | 20 | - | - |
| | | | | |
| TOTAL | 100 | 100 | 100 | 100 |

# Hardstock is an interesterified blend of 60 wt% palm kernel oil hardened to a slip melting point of 39 degrees Celsius and 40 wt% palm oil hardened to a slip melting point of 58 degrees Celsius.

Table 2, Amount of trace mineral

| Per 100 gram spread | Example 1 | Example 2 | Comparative A | Comparative B |
|---|---|---|---|---|
| Amount of iron (mg) | 0.728 mg | 2.91 mg | 0.728 mg | 2.91 mg |
| Amount of copper (mg) | 0.204 mg | 0.816 mg | 0.204 mg | 0.816 mg |

Table 3, Peroxide value[#]

| | Initial analysis | After 15 days (storage at 10 degrees Celsius) | After 15 days (storage at 25 degrees Celsius) |
|---|---|---|---|
| Example 1 | 0.86 | 0.69 | 0.98 |
| Example 2 | 0.58 | 0.71 | 0.65 |
| Comparative A | 0.50 | 0.80 | 1.59 |
| Comparative B | 0.65 | 0.64 | 3.39 |
| # Peroxide value in milli-equivalents of active oxygen per kilogram; analysis of fat phase of product. | | | |

Table 4, Peroxide value[#]

| | Initial analysis | After 28 days (storage at 10 degrees Celsius) | After 28 days (storage at 25 degrees Celsius) |
|---|---|---|---|
| Example 1 | 0.86 | 0.92 | 2.54 |
| Example 2 | 0.58 | 0.84 | 1.26 |
| Comparative A | 0.50 | 0.94 | 8.90 |
| Comparative B | 0.65 | 1.04 | 10.44 |
| # Peroxide value in milli-equivalents of active oxygen per kilogram; analysis of fat phase of product. | | | |

**Claims**

1.  Edible water in oil emulsion spread comprising

    - 25 to 70 wt% of a fat phase,
    - a dispersed water phase,
    - poly unsaturated fatty acid (PUFA),
    - trace mineral, and
    - an evenly dispersed edible seed mixture,
    wherein the amount of seed mixture is 0.5 to 15 wt%, the seed mixture comprises two or more different edible seed and/or seed fragments, and wherein the two or more different seed and/or seed fragments is to be understood as comprising seed and/or seed fragments from two or more different origin, 60 to 100 % (w/w) of the seed mixture is bigger than 0.5 mm and 50 to 100 % (w/w) is smaller than 4 mm; and wherein at least part of the trace mineral is present in the seed mixture; and wherein edible seed is defined as being cereal grains, pseudo-cereals and oleaginous seeds and the edible seed mixture does not include nuts and beans.

2.  Edible water in oil emulsion spread according to claim 1, wherein the amount of fat phase is 30 to 60 wt%, and the total amount of trace mineral per 100 g spread is 0.2 to 60 mg, the amount of PUFA is 20 to 80 wt% calculated on total amount of fat, the fat phase comprises at least 80 wt% vegetable fat, and wherein the level of trans fatty acids on the total amount of fat phase is below 4%.

3.  Edible water in oil emulsion spread according to claim 1, wherein the fat phase comprises at least 25 wt% vegetable fat, more preferably at least 50 wt% vegetable fat and most preferably at least 80 wt% vegetable fat, and wherein the level of trans fatty acids on total amount of fat phase is below 10%, more preferably below 7%, even more preferably below 4% and most preferably below 2%

4.  10%, more preferably below 7%, even more preferably below 4% and most preferably below 2%.

5.  Edible water in oil emulsion spread according to any of claims 1 to 4 wherein the amount of seed mixture is 1 to 10 wt%, more preferably 2 to 8 wt%, even more preferably 3 to 7 wt% and most preferably 4 to 6 wt%.

6.  Edible water in oil emulsion spread according any of claims 1 to 4 wherein the seed mixture comprises three, preferably four and more preferably five different edible seed and/or seed fragments.

7.  Edible water in oil emulsion spread according any one of claims 1 to 6
    wherein the edible seed and/or seed fragments are selected from the group consisting of wheat, barley, oat, rye, rice, corn (maize), sorghum, millets, triticale, fonio, palmer's grass, spelt, teff, linseed (flax seed), breadnut, buckwheat, cattail, chia, grain amaranth, kaniwa, pitseed goosefoot, quinoa, wattleseed (acacia seed), sunflower seed, sesame seed, pumpkin seed and fragments thereof.

8.  Edible water in oil emulsion spread according any one of claims 1 to 6
    wherein the edible seed and/or seed fragments are selected from the group consisting of wheat, barley, oat, rye, linseed (flax seed), sunflower seed, sesame seed and fragments thereof.

9.  Edible water in oil emulsion spread according to any one of claims 1 to 8
    wherein 60 to 100 % (w/w), preferably 70 to 95 % (w/w) more preferably 75 to 90 % (w/w) and even more preferably 80 to 85 % (w/w) of the seed mixture is bigger than 0.5 mm.

10. Edible water in oil emulsion spread according claim 9 wherein the seed mixture is bigger than 0.6 mm, more preferable bigger than 0.7 mm, even more preferable bigger than 0.8 mm and most preferable bigger 0.9 mm.

11. Edible water in oil emulsion spread according to any one of claims 1 to 9 wherein 50 to 100 % (w/w), preferably 60 to 95 % (w/w), more preferably 70 to 90 % (w/w) and even more preferably 80 to 85 % (w/w) of the seed mixture is smaller than 4 mm.

12. Edible water in oil emulsion spread according to claim 11 wherein the seed mixture is smaller than 3.5 mm, preferably smaller than 3 mm, more preferably smaller than 2.5 mm and most preferably smaller than 2 mm.

**13.** Edible water in oil emulsion spread according to any one of claims 1 to 12 wherein the amount of fat phase is 30 to 60 wt% and more preferably 35 to 50 wt%.

**14.** Edible water in oil emulsion spread according to any one of claims 1 to 13 wherein the amount of dispersed water phase is 20 to 80 wt%, preferably 30 to 70 wt%, more preferably 35 to 60 wt% and most preferably 40 to 50 wt%.

**15.** Edible water in oil emulsion spread according to any one of claims 1 to 14 wherein the total amount of trace mineral per 100 gram is 0.01 to 100 mg, preferably 0.1 to 80 mg, more preferably 0.2 to 60 mg, even more preferably 0.5 to 50 mg, still more preferably 0.6 mg to 5 mg and most preferably 0.7 mg to 2.5 mg.

**16.** Edible water in oil emulsion spread according to any one of claims 1 to 15 wherein at least 50 %, preferably at least 70 %, more preferably at least 80%, even more preferably at least 90% and most preferably essentially all of the total amount of trace mineral is present in the seed mixture.

**17.** Edible water in oil emulsion spread according to any one of claims 1 to 16 wherein the amount of PUFA is 20 to 80 wt%, preferably 30 to 70 wt%, more preferably 40 to 60 wt% and more preferably 50 to 55 wt% calculated on total amount of fat.

**18.** Edible water in oil emulsion spread according to any one of claims 1 to 17 wherein at least part, preferably at least 5 %, more preferably at least 10 %, even more preferably at least 20 %, still more preferably at least 40 % and most preferably at least 50 % of the total amount of PUFA is present as part of the seed mixture.

EP 2 554 052 A1

Europäisches Patentamt
European Patent Office
Office européen des brevets

# EUROPEAN SEARCH REPORT

Application Number

EP 12 19 0950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2008/254193 A1 (EDELMAN MARIJKE WILLEMIEN [NL] ET AL) 16 October 2008 (2008-10-16) * paragraph [0037] - paragraph [0060] * * examples 1-4 * * claims 1-21 * | 1-18 | INV. A23D7/00 A23D7/005 A23L1/10 A23L1/172 A23L1/304 A23L3/358 |
| A | WO 2006/122625 A1 (UNILEVER NV [NL]; UNILEVER PLC [GB]; LEVER HINDUSTAN LTD [IN]; HUNDSCH) 23 November 2006 (2006-11-23) * examples 1-4 * * claims 1-21 * | 1-18 | |
| A | EP 1 510 140 A1 (UNILEVER NV [NL]) 2 March 2005 (2005-03-02) * paragraph [0011] - paragraph [0021] * * claims 1-8 * | 1-18 | |
| A | US 2006/110521 A1 (HEISE JERALD D [US] ET AL) 25 May 2006 (2006-05-25) * the whole document * | 1-18 | TECHNICAL FIELDS SEARCHED (IPC) A23D A23L |

The present search report has been drawn up for all claims

| Place of search | Date of completion of the search | Examiner |
|---|---|---|
| Munich | 13 December 2012 | Korb, Margit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

## ANNEX TO THE EUROPEAN SEARCH REPORT
## ON EUROPEAN PATENT APPLICATION NO.

EP 12 19 0950

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2012

| Patent document cited in search report | | Publication date | Patent family member(s) | | Publication date |
|---|---|---|---|---|---|
| US 2008254193 | A1 | 16-10-2008 | AT | 532420 T | 15-11-2011 |
| | | | CA | 2683044 A1 | 23-10-2008 |
| | | | EP | 2134197 A2 | 23-12-2009 |
| | | | US | 2008254193 A1 | 16-10-2008 |
| | | | WO | 2008125428 A2 | 23-10-2008 |
| WO 2006122625 | A1 | 23-11-2006 | AR | 053469 A1 | 09-05-2007 |
| | | | BR | PI0612915 A2 | 07-12-2010 |
| | | | BR | PI0612917 A2 | 07-12-2010 |
| | | | CN | 101175408 A | 07-05-2008 |
| | | | CN | 101175409 A | 07-05-2008 |
| | | | EP | 1890549 A1 | 27-02-2008 |
| | | | IL | 186759 A | 31-03-2011 |
| | | | US | 2009068315 A1 | 12-03-2009 |
| | | | US | 2009087519 A1 | 02-04-2009 |
| | | | WO | 2006122625 A1 | 23-11-2006 |
| | | | ZA | 200709029 A | 25-02-2009 |
| | | | ZA | 200709857 A | 24-06-2009 |
| EP 1510140 | A1 | 02-03-2005 | NONE | | |
| US 2006110521 | A1 | 25-05-2006 | AR | 051420 A1 | 10-01-2007 |
| | | | AR | 051421 A1 | 10-01-2007 |
| | | | AR | 054213 A1 | 13-06-2007 |
| | | | AT | 469957 T | 15-06-2010 |
| | | | AU | 2005304670 A1 | 18-05-2006 |
| | | | AU | 2005304994 A1 | 18-05-2006 |
| | | | BR | PI0517095 A | 30-09-2008 |
| | | | BR | PI0517098 A | 30-09-2008 |
| | | | BR | PI0517776 A | 21-10-2008 |
| | | | CA | 2586218 A1 | 18-05-2006 |
| | | | CA | 2586309 A1 | 18-05-2006 |
| | | | CA | 2586310 A1 | 18-05-2006 |
| | | | EP | 1809118 A1 | 25-07-2007 |
| | | | EP | 1809727 A2 | 25-07-2007 |
| | | | EP | 1827123 A2 | 05-09-2007 |
| | | | EP | 2218334 A2 | 18-08-2010 |
| | | | EP | 2446747 A1 | 02-05-2012 |
| | | | JP | 2008519129 A | 05-06-2008 |
| | | | JP | 2008519133 A | 05-06-2008 |
| | | | KR | 20070097429 A | 04-10-2007 |
| | | | KR | 20070107664 A | 07-11-2007 |
| | | | US | 2006110521 A1 | 25-05-2006 |
| | | | US | 2006111254 A1 | 25-05-2006 |
| | | | US | 2006111578 A1 | 25-05-2006 |
| | | | US | 2010255157 A1 | 07-10-2010 |

EPO FORM P0459

For more details about this annex : see Official Journal of the European Patent Office, No. 12/82

**EP 2 554 052 A1**

## ANNEX TO THE EUROPEAN SEARCH REPORT
## ON EUROPEAN PATENT APPLICATION NO.

EP 12 19 0950

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2012

| Patent document cited in search report | Publication date | Patent family member(s) | | Publication date |
|---|---|---|---|---|
| | | US | 2012058235 A1 | 08-03-2012 |
| | | US | 2012309995 A1 | 06-12-2012 |
| | | UY | 29194 A1 | 30-06-2006 |
| | | UY | 29195 A1 | 30-06-2006 |
| | | UY | 29196 A1 | 30-06-2006 |
| | | WO | 2006052662 A2 | 18-05-2006 |
| | | WO | 2006052664 A2 | 18-05-2006 |
| | | WO | 2006052974 A1 | 18-05-2006 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20080254193 A

**Non-patent literature cited in the description**

• **MILLER, D.D. ; SCHRICKER, B.R. ; RASMUSSEN, R.R. et al.** *American Journal of Clinical Nutrition,* 1981, vol. 34 (10), 2248-2256

• **GLAHN, R.P. ; LEE, O.A. ; YEUNG, A. et al.** *Journal of Nutrition,* 1998, vol. 128 (9), 1555-1561

• **FAIRWEATHER-TAIT, S.J. ; LYNCH, S. ; HOTZ, C. et al.** *International Journal for Vitamin and Nutrition Research,* 2007, vol. 75 (6), 371-374